# FASCICULE DE BREVET EUROPEEN

(11) **EP 2 342 463 B1**
(45) Date de publication et mention de la délivrance du brevet: **16.11.2016**
(21) Numéro de dépôt: 09747889.5
(22) Date de dépôt: 21.09.2009
(51) Int. Cl.: F04D 19/04, F04D 27/02, F04D 29/058, F04D 27/00, F16C 32/04, H02K 7/09

(54) **POMPE TURBOMOLECULAIRE A MONTAGE SOUPLE**
TURBOMOLEKULARPUMPE MIT EINER FLEXIBLEN HALTERUNG
TURBOMOLECULAR PUMP WITH A FLEXIBLE MOUNT

(30) Priorité: 22.09.2008 FR 0856348
(43) Date de publication de la demande: 13.07.2011
(73) Titulaire: SKF MAGNETIC MECHATRONICS, 27950 Saint-Marcel (FR)
(72) Inventeur: SCHROEDER, Ulrich, F-76130 Mont Saint Aignan (FR); BRUNET, Maurice, F-27950 Sainte Colombe Pres Vernon (FR); LEMARCHAND, Olivier, F-27930 Guichainville (FR)
(74) Mandataire: Desormiere, Pierre-Louis
(86) Numéro de dépôt international: PCT/FR2009/051768
(87) Numéro de publication internationale: WO 2010/031977

(56) Documents cités:
- EP-A1- 0 445 691
- EP-A2- 1 046 821
- EP-A2- 1 460 293
- FR-A1- 2 536 473

## Description

### Domaine de l'invention

La présente invention a pour objet une pompe turbomoléculaire à montage souple, comprenant un carter étanche conçu de telle manière qu'il puisse être monté par l'intermédiaire d'un amortisseur mécanique sur un bâti, un support vertical solidaire du carter et disposé à l'intérieur de celui-ci pour supporter un rotor creux équipé d'ailettes et entraîné en rotation par un moteur électrique, au moins des premier et deuxième paliers magnétiques radiaux montés sur le support, au moins un palier magnétique axial monté sur le support, des détecteurs radiaux de la position radiale du rotor, au moins un détecteur axial de la position axiale du rotor, au moins un palier mécanique de secours et un module de commande comprenant au moins des circuits d'alimentation du moteur électrique et des paliers magnétiques axial et radial et des circuits d'asservissement des paliers magnétiques axial et radial aptes à corriger tout déplacement du rotor en translation selon trois axes (xyz) d'un repère orthonormé et un basculement par rapport à deux axes de basculement.

### Art antérieur

Des pompes turbomoléculaires montées à l'aide de paliers magnétiques actifs ont déjà été décrites par exemple dans les documents de brevet FR 2 747 431 et WO 2005/038263.

Dans la majorité des applications, telles que la production de semi-conducteurs, une pompe turbomoléculaire sur paliers magnétiques n'est pas exposée à des perturbations externes.

Dans ce cas, les pompes sont généralement fixées de manière rigide sur un support et ne bougent pas. Les asservissements de position sont alors optimisés pour assurer le montage de la pompe dans n'importe quelle position et pour que la pompe génère un minimum de bruit et de vibrations.

Il existe toutefois certaines applications, telles que par exemple les microscopes électroniques, qui demandent un niveau vibratoire extrêmement faible. Dans ces applications à faible niveau de vibration, le carter de la pompe n'est pas monté de façon rigide sur un bâti, mais ce carter est découplé du bâti par un amortisseur mécanique, de manière à définir un montage souple.

Dans certaines applications, mettant en oeuvre un tel montage souple de la pompe, il peut être nécessaire que l'utilisateur déplace ou fasse bouger l'ensemble outil-pompe avec la pompe en rotation.

Les réglages des asservissements pour de telles applications deviennent très délicats.

Pour obtenir le faible niveau vibratoire spécifié, une application à faible niveau de vibration nécessite un asservissement d'une faible raideur et d'une bande passante limitée.

Toutefois, dans ce cas, un mouvement du carter de la pompe peut provoquer un contact entre l'arbre en rotation et les roulements de secours, ce qui induit du bruit, de l'usure et des vibrations.

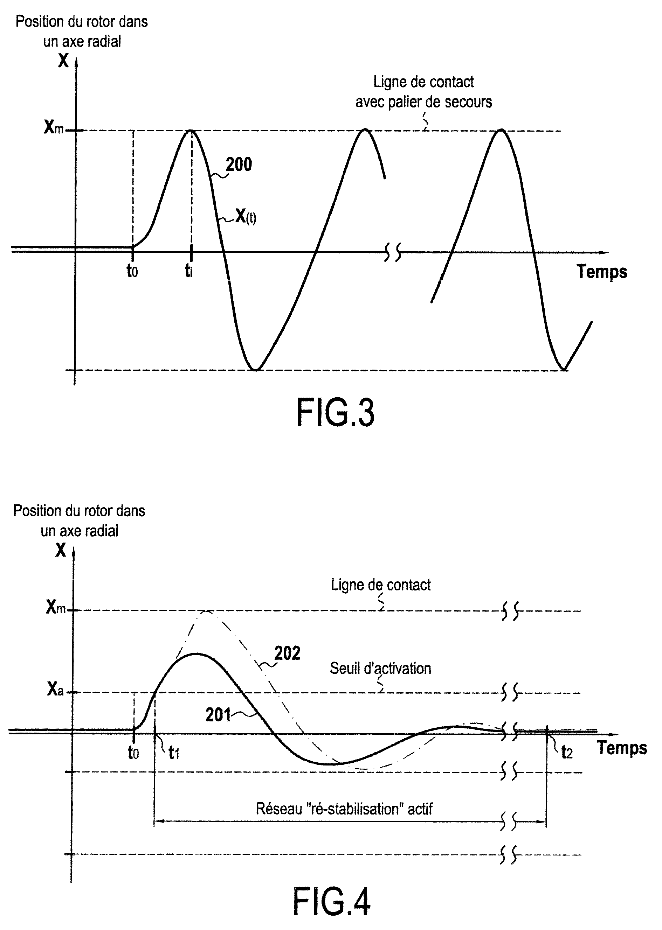

Après un mouvement du rotor, initié à un instant tₒ et un contact de celui-ci à un instant tᵢ, le rotor s'étant déplacé dans au moins une direction d'une distance Xₘ qui correspond à une entrée en contact avec les organes de roulement d'un palier de secours, le comportement de la boucle d'asservissement devient très complexe et non-linéaire et il y a un risque d'une oscillation permanente. La figure 3 montre le comportement suite à l'application d'un tel choc, avec les oscillations permanentes 200 dues à l'instabilité de l'asservissement.

On connaît, par le document de brevet EP 1 046 821 A2, une pompe turbomoléculaire comprenant un rotor monté sur paliers magnétiques et un système de surveillance des courants circulant dans les électro-aimants des paliers magnétiques afin de couper définitivement l'alimentation des paliers magnétiques si les courants dépassent un seuil prédéterminé pendant un temps prédéterminé. Le système permet d'éviter une déstabilisation non réversible d'une boucle d'asservissement en position suite à un contact avec des roulements de secours, mais ne permet pas de réduire l'usure des pièces en agissant de façon préventive, puisque le système est conçu exclusivement pour provoquer un arrêt de l'alimentation électrique qui entraîne obligatoirement un contact entre le rotor et les paliers de secours.

### Définition et objet de l'invention

La présente invention vise à remédier aux inconvénients précités et à permettre, dans le cadre d'une pompe turbomoléculaire à montage souple, d'éviter les problèmes de contact d'un rotor avec les roulements des paliers de secours, en dehors des cas de défaillance des paliers magnétiques ou de démarrage et arrêt de la pompe, et à tout le moins de réduire les conséquences d'éventuels contacts et notamment les oscillations permanentes, sans pour autant affecter les qualités du montage de la pompe à faible niveau de vibrations.

Ces buts sont atteints, conformément à l'invention, grâce à une pompe turbomoléculaire à montage souple, comprenant un carter étanche conçu de telle manière qu'il puisse être monté par l'intermédiaire d'un amortisseur mécanique sur un bâti, un support vertical solidaire du carter et disposé à l'intérieur de celui-ci pour supporter un rotor creux équipé d'ailettes et entraîné en rotation par un moteur électrique, au moins des premier et deuxième paliers magnétiques radiaux montés sur le support, au moins un palier magnétique axial monté sur le support, des détecteurs radiaux de la position radiale du rotor, au moins un détecteur axial de la position axiale du rotor, au moins un palier mécanique de secours et un module de commande comprenant au moins des circuits d'alimentation du moteur électrique et des paliers magnétiques axial et radial et des circuits d'asservissement des paliers magnétiques axial et radial aptes à corriger tout déplacement du rotor en translation selon trois axes (xyz) d'un repère orthonormé et un basculement par rapport à deux axes de basculement, caractérisée en ce que les circuits d'asservissement présentent une faible raideur et comprennent des moyens de filtrage des signaux reçus par lesdits circuits d'asservissement pour définir une bande passante limitée, en ce que le module de commande comprend une unité de comparaison pour détecter à partir des signaux délivrés par les détecteurs axial et radial des déplacements anormalement grands du rotor supérieurs à des seuils prédéterminés (Sxd, Syd, Szd, Sxb, Syb) selon lesdits trois axes (xyz) d'un repère orthonormé et lesdits deux axes de basculement, et en ce que les circuits d'asservissement comprennent un réseau de restabilisation et des moyens d'activation sélective du réseau de restabilisation pour activer ce réseau de stabilisation pendant une durée prédéterminée (Δt) après un instant (t₁) de détection du dépassement de l'un au moins desdits seuils prédéterminés lors d'un déplacement du rotor.

Ladite durée prédéterminée (Δt) d'activation sélective du réseau de restabilisation est paramétrable.

Avantageusement, ladite durée prédéterminée (Δt) d'activation sélective du réseau de restabilisation est comprise entre 0,5 seconde et 5 secondes.

Selon une réalisation possible, ladite durée prédéterminée (Δt) d'activation sélective du réseau de restabilisation est fixe.

Les seuils prédéterminés (Sxd, Syd, Szd, Sxb, Syb) selon lesdits trois axes (xyz) d'un repère orthonormé et lesdits deux axes de basculement sont paramétrables.

Avantageusement, les seuils prédéterminés (Sxd, Syd, Szd, Sxb, Syb) selon lesdits trois axes (xyz) d'un repère orthonormé et lesdits deux axes de basculement sont compris entre 25 et 40 % du déplacement maximum possible du rotor dans le palier mécanique de secours et, de préférence, de l'ordre du tiers de ce déplacement maximum.

Selon un mode de réalisation particulier, ladite unité de comparaison et lesdits moyens d'activation sélective du réseau de restabilisation sont inclus dans un processeur de signal numérique DSP de la pompe comprenant lesdits circuits d'asservissement.

### Brève description des dessins

D'autres caractéristiques et avantages de l'invention ressortiront de la description suivante de modes particuliers de réalisation, donnés à titre d'exemples, en référence aux dessins annexés, sur lesquels :
- la figure 1 est une vue en coupe longitudinale d'un exemple de pompe turbomoléculaire à paliers magnétiques actifs et à montage souple à laquelle l'invention est applicable,
- la figure 2 est un schéma-bloc montrant les éléments principaux d'un module de commande d'une pompe turbomoléculaire à laquelle est applicable l'invention,
- la figure 3 est un diagramme montrant la position du rotor selon un axe prédéterminé dans le cas d'une pompe turbomoléculaire à montage souple traditionnel, avec initiation d'un mouvement entraînant un contact avec un palier de secours et des oscillations permanentes,
- la figure 4 représente des diagrammes montrant la position du rotor selon un axe prédéterminé dans le cas d'une pompe turbomoléculaire à montage souple selon l'invention, avec initiation d'un mouvement qui est rapidement amorti, et
- la figure 5 est un organigramme montrant un certain nombre d'étapes mises en oeuvre dans les circuits d'asservissement du module de commande d'une pompe turbomoléculaire selon l'invention.

### Description détaillée de modes de réalisation préférentiels

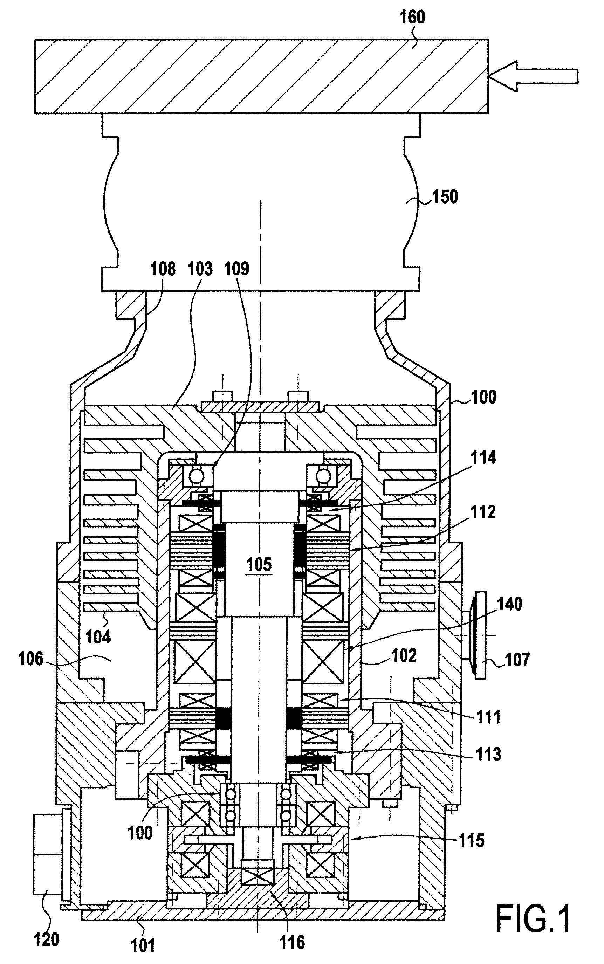

La figure 1 montre un exemple de pompe turbomoléculaire à paliers magnétiques actifs à laquelle l'invention peut être appliquée.

La pompe turbomoléculaire comprend un carter extérieur étanche 100 monté sur une embase 101 supportant un support vertical 102 sur lequel sont montés les bobinages d'un moteur électrique 140 et de paliers magnétiques radiaux 111, 112 disposés de part et d'autre du moteur 140. Les paliers 111, 112 servent à supporter sans contact un arbre central 105 à la partie supérieure duquel est fixé un rotor creux 103 qui est disposé comme une coiffe par rapport au support 102 et porte, sur sa face externe, des ailettes 104, le moteur 140 assurant l'entraînement en rotation de cet arbre 105. Un palier magnétique axial 115 assure le maintien vertical de l'arbre 105 par rapport au support 102. Des détecteurs 113, 114 de la position radiale de l'arbre 105 par rapport au support 102 sont associés aux paliers magnétiques radiaux 111, 112. De la même manière, un détecteur 116 de la position axiale de l'arbre 105 par rapport au support 102 est associé au palier magnétique axial 115. Un palier supérieur de secours 109, par exemple à rouleaux, et un palier radial inférieur de secours 110 complètent la suspension magnétique de l'arbre 105 pour supporter ce dernier en cas de défaillance de la suspension magnétique active.

Sur la figure 1, le carter 100 est fixé à sa partie supérieure, par l'intermédiaire d'un élément de découplage mécanique 150, qui joue un rôle d'amortisseur, sur un bâti 160, de sorte qu'il est constitué une pompe turbomoléculaire à montage souple qui permet d'amortir les vibrations par exemple en cas de déplacement du bâti 160.

Selon une variante de réalisation la pompe pourrait être fixée à un bâti non par le haut, mais par le bas, par son embase 101, par l'intermédiaire d'un élément de découplage mécanique analogue à l'élément 150.

Dans les deux cas, il est réalisé un montage souple et la pompe n'est pas montée de façon rigide sur le bâti 160, de telle sorte que si par exemple l'utilisateur doit déplacer le bâti 160 lorsque la pompe est en fonctionnement, le moins de vibrations possibles soient transmises à la pompe.

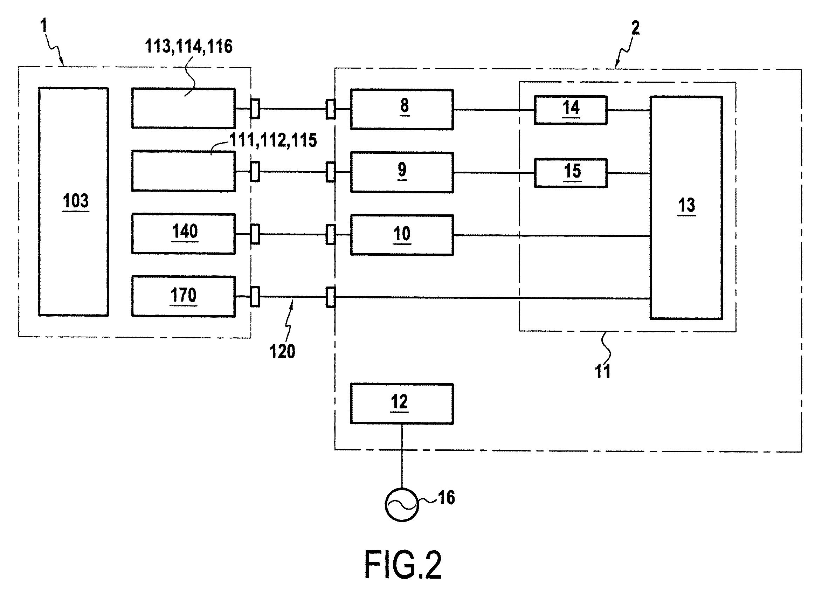

La figure 2 montre les constituants principaux d'un module de commande d'une pompe turbomoléculaire telle que celle de la présente invention.

Sur la figure 2, la pompe turbomoléculaire 1 est schématisée avec le rotor 103, les détecteurs de déplacement 113, 114, 116, les paliers magnétiques 111, 112, 115, le moteur électrique 140 et un capteur 170 de la vitesse de rotation du rotor 103.

Ces éléments fonctionnels de la pompe 1 sont reliés par des câbles 120 à une unité de commande 2 qui comprend principalement une source d'alimentation électrique 12 à partir d'un réseau électrique 16, et des circuits électroniques de commande.

A titre d'exemple, les circuits électroniques de commande peuvent comprendre une carte 11 de processeur de signal comprenant un processeur principal de signal numérique (DSP) 13, un convertisseur analogique-numérique 14 et un convertisseur numérique-analogique 15.

Les détecteurs de déplacement radial 113, 114 et axial 116 sont reliés à un circuit 8 de calcul de déplacement qui est lui-même relié au convertisseur analogique-numérique 14 pour fournir au processeur principal de signal numérique 13 des signaux numériques représentatifs des déplacements du rotor 103 par rapport au carter de la pompe.

Le convertisseur numérique-analogique 15 reçoit des signaux de commande du processeur principal de signal numérique 13 et fournit des signaux analogiques au circuit pilote 9 d'alimentation des enroulements des paliers magnétiques radial 111, 112 et axial 115.

Le moteur électrique 140 est lui-même commandé à partir du processeur principal de signal numérique 13 par l'intermédiaire d'un circuit 10 de commande d'entraînement à vitesse variable, le capteur 170 de vitesse de rotation étant lui-même relié au processeur principal de signal numérique 13.

Le processeur principal de signal numérique 13 est un microprocesseur optimisé pour les calculs qui permet d'effectuer un traitement du signal numérique et notamment des fonctions du pilotage et d'extraction de signaux. L'architecture de ce microprocesseur est optimisée pour permettre d'effectuer rapidement des calculs complexes tout en permettant un accès facile à un grand nombre d'entrées-sorties. Ce microprocesseur peut naturellement être également utilisé en combinaison avec d'autres microprocesseurs classiques.

Dans le cadre de la présente invention, le processeur principal de signal numérique 13 définit un asservissement d'une faible raideur et d'une bande passante limitée (obtenue par filtrage) afin d'obtenir un faible niveau vibratoire spécifié.

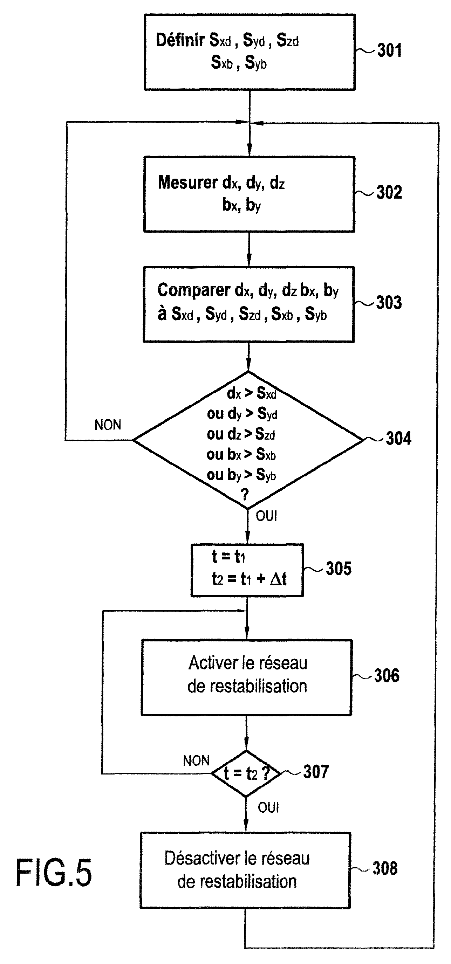

Afin d'éviter qu'en cas de mouvement brusque du bâti 160 de la pompe à un instant tₒ, les roulements de l'un ou l'autre des paliers de secours 109, 110 viennent en contact avec le rotor 103, par exemple selon un axe radial X représenté sur la figure 3, lorsque le rotor 103 s'est déplacé d'une distance Xₘ et afin d'empêcher les mouvements instables d'oscillation permanente 200 qui s'ensuivent avec des contacts renouvelés entre le rotor 103 et les roulements des paliers de secours 109, 110, la présente invention met en oeuvre des moyens particuliers qui seront explicités en référence aux figures 4 et 5.

Ainsi, selon l'invention, on détecte un déplacement anormalement grand, dû par exemple à un choc externe sur le bâti 160 ou le carter de la pompe 100, ou encore dû à un déplacement du bâti 160 et de la pompe, et on commute au niveau des circuits d'asservissement 13 pour une durée prédéterminée Δt, sur un réseau correcteur différent, afin d'éviter si possible le contact avec un roulement de palier de secours (courbe 201 de la figure 4) ou, si on ne peut pas éviter un tel contact (courbe 202 de la figure 4) afin de restabiliser l'asservissement dans les meilleures conditions.

La figure 4 illustre le processus de correction pour l'exemple d'un déplacement du rotor selon un axe radial X à la suite d'un choc initié à un instant tₒ sur la pompe ou son bâti 160.

Lorsque à un instant t₁ le déplacement du rotor 103 dépasse une valeur Xₐ, un réseau correcteur de restabilisation est activé pendant une durée Δt jusqu'à un instant t₂.

Par défaut, l'asservissement conserve des caractéristiques de faible raideur mais en cas de dépassement d'un seuil (ici Xₐ selon un axe radial X) lors des déplacements du rotor, un réseau de restabilisation est activé par le processeur principal de signal numérique 13 pour provoquer un amortissement des mouvements du rotor 103.

Dans ce cas, si le choc n'est pas trop important (courbe 201), on peut éviter un contact avec les roulements des paliers de secours, la courbe 201 s'infléchissant avant d'atteindre la ligne de contact correspondant à un déplacement Xₘ.

Si le choc est plus important et si, malgré l'activation, à l'instant t₁ du réseau de restabilisation, le rotor 103 vient quand même en contact avec les roulements des paliers de secours (courbe 202), il se produit un amortissement rapide des mouvements du rotor 103 et après une durée prédéterminée Δt, c'est-à-dire à un instant t₂, le réseau de restabilisation est désactivé et l'asservissement présente à nouveau ses caractéristiques de base de faible raideur qui sont optimisées pour définir un montage avec un minimum de vibrations.

Le temps Δt d'activation du réseau de restabilisation est paramétrable en fonction de l'application et peut être fixé à l'avance de façon prédéterminée. Ce temps d'activation Δt peut toutefois également être adapté à l'état de la restabilisation.

Le déplacement est surveillé en permanence dans les 5 axes et, s'il y a un dépassement du seuil dans un ou plusieurs axes, on commute sur le réseau de restabilisation.

Le seuil d'activation est paramétrable. Il est typiquement 1/3 du déplacement maximum dans les roulements de secours, et peut être compris entre 25 et 40 % de ce déplacement maximum.

Le temps d'activation est également paramétrable. Il est typiquement de 0,5 à 5 secondes.

Dans la pratique, les ajustements des asservissements et le paramétrage sont réalisés à l'aide du processeur de signal 13 (DSP) de la pompe.

On a représenté sur la figure 5 un exemple d'organigramme montrant les étapes principales mises en oeuvre selon l'invention dans les circuits d'asservissement du module de commande d'une pompe turbomoléculaire pour éviter les conséquences dommageables dues à des chocs ou mouvements brusques de la pompe ou de son bâti 160 dans le cadre d'une pompe turbomoléculaire à montage souple, où le réglage par défaut des paramètres d'asservissement correspond à une faible raideur et une bande passante limitée.

Une étape 301 consiste en premier lieu à définir des seuils Sxd, Syd, Szd dans les trois directions radiale et axiale d'un repère orthonormé xyz lié à l'axe théorique du rotor 103, et des seuils Sxb, Syb correspondant à des axes de basculement de ce rotor 103.

Ces seuils Sxd, Syd, Szd, Sxb, Syb sont de préférence compris entre 25 et 40 % du déplacement maximum possible du rotor 103 dans les paliers mécaniques de secours 109, 110.

A l'étape 302, on procède à l'aide des capteurs de position 113, 114, 116 et des circuits 8, 14, 13 à la mesure des déplacements du rotor 103, soit en translation (déplacements dx dy dz) soit en basculement (déplacements bx by) selon les cinq axes de surveillance.

A l'étape 303, on compare les valeurs mesurées des déplacements dx dy dz bx by aux seuils respectifs Sxd Syd Szd Sxb Syb prédéfinis à l'étape 301.

A l'étape 304, on procède à un test pour savoir si au moins l'une des valeurs mesurées des déplacements dx dy dz bx by dépasse le seuil correspondant Sxd Syd Szd Sxb Syb.

Si la réponse est non, on retourne à l'étape 302 de mesure et veille et les caractéristiques de base de l'asservissement ne sont pas modifiées.

Si la réponse est oui, on définit à l'étape 305 un instant t₁ de départ et une durée Δt d'activation de correction.

L'étape 306 constitue une étape d'activation du réseau de restabilisation qui est initiée à l'instant t₁.

Un test 307 est pratiqué pour déterminer si l'on a atteint un temps t₂ correspondant au temps t₁ augmenté de la durée Δt définie pour l'activation du réseau de restabilisation.

Si la réponse est non on reste à l'étape 306 de l'activation du réseau de restabilisation.

Si la réponse est oui on passe à l'étape 308 de désactivation du réseau de restabilisation et on retourne à l'étape 302 de mesure de veille des déplacements du rotor 103.

Naturellement, diverses variantes et modifications de l'invention sont possibles et par exemple les circuits de commande peuvent ne pas inclure un processeur de signal numérique du type DSP, mais un ensemble de processeurs ou circuits d'asservissement d'autres types.

## Revendications

1. Pompe turbomoléculaire à montage souple, comprenant un carter étanche (100) conçu de telle manière qu'il puisse être monté par l'intermédiaire d'un amortisseur mécanique (150) sur un bâti (160), un support vertical (102) solidaire du carter (100) et disposé à l'intérieur de celui-ci pour supporter un rotor creux (103) équipé d'ailettes (104) et entraîné en rotation par un moteur électrique (140), au moins des premier et deuxième paliers magnétiques radiaux (111, 112) montés sur le support (102),
au moins un palier magnétique axial (115) monté sur le support (102), des détecteurs radiaux (113, 114) de la position radiale du rotor (103), au moins un détecteur axial (116) de la position axiale du rotor, au moins un palier mécanique de secours (109, 110) et un module de commande (2) comprenant au moins des circuits (12, 16) d'alimentation du moteur électrique (140) et des paliers magnétiques axial (115) et radial (111, 112) et des circuits (13) d'asservissement des paliers magnétiques axial (115) et radial (111, 112) aptes à corriger tout déplacement du rotor (103) en translation selon trois axes (xyz) d'un repère orthonormé et un basculement par rapport à deux axes de basculement, le module de commande (2) comprenant une unité de comparaison (303, 304) pour détecter à partir des signaux délivrés par les détecteurs axial (116) et radial (113, 114) des déplacements anormalement grands du rotor (103) supérieurs à des seuils prédéterminés (Sxd, Syd, Szd, Sxb, Syb) selon lesdits trois axes (xyz) d'un repère orthonormé et lesdits deux axes de basculement, les circuits d'asservissement (13) présentent une faible raideur, **caractérisée en ce que** les circuits d'asservissement (13) comprennent des moyens de filtrage des signaux reçus par lesdits circuits d'asservissement (13) pour définir une bande passante limitée, et **en ce que** les circuits d'asservissement (13) comprennent un réseau de restabilisation et des moyens (306 à 308) d'activation sélective du réseau de restabilisation pour activer ce réseau de restabilisation pendant une durée prédéterminée (Δt) après un instant (t₁) de détection du dépassement de l'un au moins desdits seuils prédéterminés lors d'un déplacement du rotor (103).

2. Pompe selon la revendication 1, **caractérisée en ce que** ladite durée prédéterminée (Δt) d'activation sélective du réseau de restabilisation est paramétrable.

3. Pompe selon la revendication 1 ou 2, **caractérisée en ce que** ladite durée prédéterminée (Δt) d'activation sélective du réseau de restabilisation est comprise entre 0,5 secondes et 5 secondes.

4. Pompe selon l'une quelconque des revendications 1 à 3, **caractérisée en ce que** ladite durée prédéterminée (Δt) d'activation sélective du réseau de restabilisation est fixe.

5. Pompe selon l'une quelconque des revendications 1 à 4, **caractérisée en ce que** les seuils prédéterminés (Sxd, Syd, Szd, Sxb, Syb) selon lesdits trois axes (xyz) d'un repère orthonormé et lesdits deux axes de basculement sont paramétrables.

6. Pompe selon l'une quelconque des revendications 1 à 5, **caractérisée en ce que** les seuils prédéterminés (Sxd, Syd, Szd, Sxb, Syb) selon lesdits trois axes (xyz) d'un repère orthonormé et lesdits deux axes de basculement sont compris entre 25 et 40 % du déplacement maximum possible du rotor (103) dans le palier mécanique de secours (109, 110).

7. Pompe selon l'une quelconque des revendications 1 à 6, **caractérisée en ce que** ladite unité de comparaison (303, 304) et lesdits moyens (306 à 308) d'activation sélective du réseau de restabilisation sont inclus dans un processeur de signal numérique DSP de la pompe.

## Patentansprüche

1. Turbomolekularpumpe mit einer flexiblen Halterung, aufweisend ein dichtes Gehäuse (100), das derart konzipiert ist, dass es mittels eines mechanischen Stoßdämpfers (150) auf einem Rahmen (160) montiert werden kann, einen vertikalen Träger (102), der fest mit dem Gehäuse (100) verbunden und innerhalb desselben angeordnet ist, um einen Hohlrotor (103) zu tragen, der mit Schaufeln (104) versehen ist und von einem Elektromotor (140) drehend angetrieben wird, mindestens erste und zweite radiale Magnetlager (111, 112), die auf dem Träger (102) montiert sind,
mindestens ein axiales Magnetlager (115), das auf dem Träger (102) montiert ist, radiale Detektoren (113, 114) der radialen Position des Rotors (103), mindestens einen axialen Detektor (116) der axialen Position des Rotors, mindestens ein mechanisches Notlager (109, 110) und ein Steuerungsmodul (2), aufweisend mindestens Speiseschaltungen (12, 16) des Elektromotors (140) und axiale (115) und radiale (111, 112) Magnetlager und Servoschaltungen (13) der axialen (115) und radialen (111, 112) Magnetlager, die geeignet sind, jede translatorische Verschiebung des Rotors (103) entlang dreier Achsen (xyz) eines orthonormierten Bezugspunkts und ein Schwenken in Bezug auf zwei Schwenkachsen zu korrigieren, wobei das Steuerungsmodul (2) eine Vergleichseinheit (303, 304) aufweist, um ausgehend von Signalen, die von den axialen (116) und radialen (113, 114) Detektoren geliefert werden, abnorm große Verschiebungen des Rotors (103) zu detektieren, die vorbestimmte Schwellenwerte (Sxd, Syd, Szd, Sxb, Syb) entlang der drei Achsen (xyz) eines orthonormierten Bezugspunkts und der beiden Schwenkachsen übersteigen,
wobei die Servoschaltungen (13) eine geringe Steifigkeit haben, **dadurch gekennzeichnet, dass** die Servoschaltungen (13) Einrichtungen zum Filtern von Signalen aufweisen, die von den Servoschaltungen (13) empfangen werden, um eine begrenzte Bandbreite zu definieren, und dadurch, dass die Servoschaltungen (13) ein Restabilisierungsnetz und Einrichtungen (306 bis 308) zur selektiven Aktivierung des Restabilisierungsnetzes aufweisen, um dieses Restabilisierungsnetz für eine vorbestimmte Dauer (Δt) nach einem Moment (t₁) der Detektion des Überschreitens des mindestens einen der vorbestimmten Schwellenwerte während einer Verschiebung des Rotors (103) zu aktivieren.

2. Pumpe nach Anspruch 1, **dadurch gekennzeichnet, dass** die vorbestimmte Dauer (Δt) der selektiven Aktivierung des Restabilisierungsnetzes einstellbar ist.

3. Pumpe nach Anspruch 1 oder 2, **dadurch gekennzeichnet, dass** die vorbestimmte Dauer (Δt) der selektiven Aktivierung des Restabilisierungsnetzes im Bereich zwischen 0,5 Sekunden und 5 Sekunden liegt.

4. Pumpe nach einem der Ansprüche 1 bis 3, **dadurch gekennzeichnet, dass** die vorbestimmte Dauer (Δt) der selektiven Aktivierung des Restabilisierungsnetzes fest ist.

5. Pumpe nach einem der Ansprüche 1 bis 4, **dadurch gekennzeichnet, dass** die vorbestimmten Schwellenwerte (Sxd, Syd, Szd, Sxb, Syb) entlang der drei Achsen (xyz) eines orthonormierten Bezugspunkts und der beiden Schwenkachsen einstellbar sind.

6. Pumpe nach einem der Ansprüche 1 bis 5, **dadurch gekennzeichnet, dass** die vorbestimmten Schwellenwerte (Sxd, Syd, Szd, Sxb, Syb) entlang der drei Achsen (xyz) eines orthonormierten Bezugspunkts und der beiden Schwenkachsen im Bereich zwischen 25 und 40 % der maximal möglichen Verschiebung des Rotors (103) in dem mechanischen Notlager (109, 110) liegen.

7. Pumpe nach einem der Ansprüche 1 bis 6, **dadurch gekennzeichnet, dass** die Vergleichseinheit (303, 304) und die Einrichtungen (306 bis 308) zur selektiven Aktivierung des Restabilisierungsnetzes in einem digitalen Signalprozessor DSP der Pumpe enthalten sind.

## Claims

1. Turbomolecular pump with flexible mount comprising a seal-tight housing (100) designed so as to be able to be mounted via a mechanical damper (150) on a frame (160), a vertical support (102) secured to the housing (100) and positioned inside the latter to support a hollow rotor (103) equipped with fins (104) and driven in rotation by an electric motor (140), at least first and second radial magnetic bearings (111, 112) mounted on the support (102),
at least one axial magnetic bearing (115) mounted on the support (102), radial detectors (113, 114) of the radial position of the rotor (103), at least one axial detector (116) of the axial position of the rotor, at least one mechanical relief bearing (109, 110) and a control module (2) comprising at least power supply circuits (12, 16) for the electric motor (140) and axial (115) and radial (111, 112) magnetic bearings and servo control circuits (13) for the axial (115) and radial (111, 112) magnetic bearings capable of correcting any displacement of the rotor (103) in translation on three axes (xyz) of an orthonormal reference frame and a tipping relative to two tipping axes, the control module (2) comprising a comparison unit (303, 304) for detecting, from the signals delivered by the axial (116) and radial (113, 114) detectors, abnormally great displacements of the rotor (103) above predetermined thresholds (Sxd, Syd, Szd, Sxb, Syb) on said three axes (xyz) of an orthonormal reference frame and said two tipping axes,
the servo control circuits (13) exhibiting a low stiffness, **characterized in that** the servo control circuits (13) comprise means for filtering the signals received by said servo control circuits (13) to define a limited bandwidth, and **in that** the servo control circuits (13) comprise a re-stabilization network and selective activation means (306 to 308) of the re-stabilization network to activate this re-stabilization network for a predetermined time (Δt) after an instant (t₁) of detection of the overshoot of at least one of said predetermined thresholds upon a displacement of the rotor (103).

2. Pump according to Claim 1, **characterized in that** said predetermined time (Δt) of selective activation of the re-stabilization network is parameterizable.

3. Pump according to Claim 1 or 2, **characterized in that** said predetermined time (Δt) of selective activation of the re-stabilization network lies between 0.5 seconds and 5 seconds.

4. Pump according to any one of Claims 1 to 3, **characterized in that** said predetermined time (Δt) of selective activation of the re-stabilization network is fixed.

5. Pump according to any one of Claims 1 to 4, **characterized in that** the predetermined thresholds (Sxd, Syd, Szd, Sxb, Syb) on said three axes (xyz) of an orthonormal reference frame and said two tipping axes are parameterizable.

6. Pump according to any one of Claims 1 to 5, **characterized in that** the predetermined thresholds (Sxd, Syd, Szd, Sxb, Syb) on said three axes (xyz) of an orthonormal reference frame and said two tipping axes lie between 25 and 40% of the maximum possible displacement of the rotor (103) in the mechanical relief bearing (109, 110).

7. Pump according to any one of Claims 1 to 6, **characterized in that** said comparison unit (303, 304) and said selective activation means (306 to 308) of the re-stabilization network are included in a digital signal processor or DSP of the pump.
